# EUROPÄISCHE PATENTSCHRIFT

(11) **EP 4 146 405 B1**
(45) Veröffentlichungstag und Bekanntmachung des Hinweises auf die Patenterteilung: **01.07.2026**
(21) Anmeldenummer: 21725092.7
(22) Anmeldetag: 07.05.2021
(51) Int. Cl.: B05B 12/00

(54) **VERFAHREN ZUR STEUERUNG EINES FARBMISCHGERÄTS UND/ODER EINES FARBAUFTRAGUNGSGERÄTS**
METHOD FOR CONTROLLING A COLOR MIXING DEVICE AND/OR A COLOR APPLICATION DEVICE
MÉTHODE DE COMMANDE D'UN APPAREIL DE MÉLANGE DE COULEURS ET/OU D'UN APPAREIL DE COMMANDE DE COULEUR

(30) Priorität: 07.05.2020 DE 102020112431
(43) Veröffentlichungstag der Anmeldung: 15.03.2023
(73) Patentinhaber: J. Wagner GmbH, 88677 Markdorf (DE)
(72) Erfinder: FIDELER, Brian Lee, Jordan, Minnesota 55352 (US); KUNDEM, Jeshwanth, Minneapolis, Minnesota 55408 (US); KIEFFER, Joseph W., Chanhassen, Minnesota 55317 (US); BEATON, Jonathan, Eden Prairie, Minnesota 55344 (US); TALETOVIC, Mujo, 88090 Immenstaad (DE); JELTSCH, Thomas, 88048 Friedrichshafen (DE)
(74) Vertreter: RavensPAT Patentanwälte Partnerschaft mbB
(86) Internationale Anmeldenummer: PCT/EP2021/062107
(87) Internationale Veröffentlichungsnummer: WO 2021/224447

(56) Entgegenhaltungen:
- WO-A1-2016/191192
- DE-A1- 102018 203 569
- DE-A1- 102018 209 377
- DE-A1- 102018 220 405
- DE-A1- 102018 220 409
- US-A1- 2012 072 035

## Beschreibung

Die Erfindung betrifft ein Verfahren zur Steuerung eines Farbmischgeräts und eines Farbauftragungsgeräts nach dem Oberbegriff des Anspruchs 1.

Um ein Projekt, beispielsweise im Bereich des Heimwerkens oder des Handwerks, mit Farbe zu versehen kommen nach dem Stand der Technik übliche Verfahren in Betracht. Dazu wird beispielsweise das Objekt in einem gewünschten Farbton mit einem Pinsel oder einer Walze angestrichen oder es wird über ein Farbsprühsystem, beispielsweise eine Farbspritzpistole, mit Farbe des gewünschten Farbtons beschichtet.

Unter Farbe im Sinne der Erfindung ist das Material der Farbe selbst (im Englischen "paint"), meist in flüssiger Form, zu verstehen. Unter dem Farbton (im Englischen "color") im Sinne der Erfindung ist die Farbgebung aufgrund der optischen Wellenlänge, welche ein Betrachter wahrnimmt, in weiteren zu verstehen.

Sowohl im Bereich des Heimwerkens als auch im Handwerk besteht oftmals die Problemstellung, dass Objekte, welche mit einem bestimmten Farbton und/oder einer bestimmten Oberflächenanmutung versehen werden sollen, erst nach deren Fertigstellung die tatsächliche Wirkung im Gesamteindruck offenbaren. Zwar kann man vorher durch Auswahl geeigneter Farbkarten auf Papier oder Karton Segmente des gewünschten Farbtons an das betreffende Objekt heran halten, um so abzuschätzen, wie der Farbton auf den gesamten Objekt wirken wird, jedoch entsteht dabei oftmals ein nicht umfassender Gesamteindruck, welche sich möglicherweise von einem Gesamteindruck des fertigen Objekts unterscheidet. Falls der fertiggestellte Gesamteindruck nicht zusagt steht in der Regel das Problem ins Haus, dass das gesamte Projekt neu überarbeitet, insbesondere abgeschliffen, vorbereitet und mit einem angepassten Farbton wiederum bearbeitet werden muss. Dies bringt Zeit-und Kostenaufwand mit sich und führt überdies oftmals zu Frustration bei der Ausführung der Arbeit.

Aus der WO2016191192 ist eine Vorrichtung bekannt welche aus einem Kamerabild dem Anwender eine Farbzuordnung vorschlägt welche dann an ein Farbmischgerät gesendet werden kann.

Aus der US 2012/0072035 A1 ist eine Abgabevorrichtung zur Verwendung in einem Abgabevorgang bekannt. Die Abgabevorrichtung umfasst ein Handgehäuse, einen Speicher zum Speichern von prozessorausführbaren Anweisungen, einen Prozessor, der mit dem Speicher gekoppelt ist und in dem Handgehäuse angeordnet ist oder damit kommunikativ gekoppelt ist, und ein Kamerasystem, das mechanisch und/oder kommunikativ mit der Abgabevorrichtung gekoppelt ist, um dem Prozessor Bildinformationen bereitzustellen. Die Bildinformation bezieht sich auf den Ausgabevorgang. Die Abgabevorrichtung umfasst auch einen Abgabemechanismus zum Steuern der Abgabe des Materials. Das Material ist nach dem Spendevorgang nicht ohne weiteres sichtbar. Der Prozessor analysiert die Bildinformationen, um Verfolgungsinformationen zu bestimmen, die eine Bewegung oder eine Ausrichtung der Abgabevorrichtung anzeigen. Der Prozessor bestimmt auch Betätigungsinformationen, die sich auf den Betrieb des Abgabemechanismus beziehen, und speichert die Betätigungsinformationen und die Verfolgungsinformationen, um eine elektronische Aufzeichnung geographischer Orte bereitzustellen, an denen das Material abgegeben wird.

Aus der DE 10 2018 203 569 A1 ist ein Farbsprühsystem bekannt, welches zumindest eine Drohne mit einem Farbsprühmodul, einem Farbbehälter, eine erste Kommunikationseinrichtung, einen Abstandssensor, eine an der Drohne angeordneten Positionsmarkierungseinrichtung zum Markieren einer Position der Drohne vor einer zu besprühenden Bildfläche und eine Bordsteuerungseinrichtung umfasst, welche eine erste Bordsteuerung für die Drohne und eine zweite Bordsteuerung für das Farbsprühmodul umfasst. Das Farbsprühsystem umfasst weiterhin eine Steuereinrichtung mit einer zweiten Kommunikationseinrichtung, welche dazu eingerichtet ist, mit der Drohne über die erste Kommunikationseinrichtung und über die zweite Kommunikationseinrichtung Daten bezüglich eines Farbsprühmusters und bezüglich der Bordsteuerungseinrichtung zum Steuern der Drohne und des Farbsprühmoduls auszutauschen.

Aus der DE 10 2018 220 409 A1 ist eine Medienauftragsvorrichtung, insbesondere eine Farbauftragsvorrichtung bekannt, mit zumindest einer Medienausgabeeinheit zu einer Ausgabe zumindest eines Mediums auf zumindest eine Oberfläche und mit zumindest einer Elektronikeinheit zumindest zu einer Steuerung und/oder Regelung der zumindest einen Medienausgabeeinheit. Hierbei umfasst die Medienauftragsvorrichtung zumindest eine Positions- und/oder Oberflächensensoreinheit, welche dazu vorgesehen ist, zumindest eine Position und/oder Ausrichtung der Medienausgabeeinheit relativ zu der Oberfläche zu erfassen, in Abhängigkeit von der die Elektronikeinheit die Medienausgabeeinheit steuert und/oder regelt.

Aus der DE 10 2018 220 405 A1 ist eine Medienauftragsvorrichtung, insbesondere eine Farbauftragsvorrichtung bekannt, mit zumindest einer Medienausgabeeinheit, welche zumindest eine Düseneinheit mit zumindest einem Düsenelement aufweist, zu einer Ausgabe zumindest eines Mediums auf zumindest eine Oberfläche und mit zumindest einer Elektronikeinheit zumindest zu einer Steuerung und/oder Regelung der Medienausgabeeinheit. Hierbei ist zumindest ein Düsenparameter des Düsenelements einstellbar und/oder verstellbar und/oder hierbei ist die Düseneinheit als eine Oszillationsdüseneinheit, insbesondere als eine Piezodüseneinheit, ausgebildet.

Schließlich ist aus der DE 10 2018 209 377 A1 ein Verfahren zur Darstellung von AR-/VR-Inhalten auf einem mobilen Endgerät bekannt, wobei aktuelle Positions- und/oder Blickrichtungsdaten eines Nutzers erfasst werden. Basierend auf den erfassten aktuellen Positions- und/oder Blickrichtungsdaten werden zukünftige Positions- und/oder Blickrichtungsdaten prädiziert. Es werden virtuelle Bildinhalte empfangen, die von einem Server für die prädizierten Positions- und/oder Blickrichtungsdaten berechnet worden sind und dem Nutzer angezeigt. Zwischen dem Empfang zeitlich aufeinander folgender virtueller Bildinhalte können die aktuellen Positions- und/oder Blickrichtungsdaten des Nutzers weiterhin erfasst werden und bereits empfangene virtuelle Bildinhalte durch das mobile Endgerät für eine perspektivische Anpassung der Darstellung bearbeitet werden. Das mobile Endgerät kann insbesondere als eine mobile Datenbrille ausgestaltet sein.

Die Erfindung hat sich daher die Aufgabe gestellt, die Vorhersehbarkeit eines Arbeitsergebnisses bei der Bearbeitung eines Projekts, insbesondere bei der Herstellung eines Farbtons einer Oberfläche durch Aufbringen von Farbe und/oder der Herstellung einer bestimmten Oberflächenanmutung zu verbessern.

Diese Aufgabe wird durch das Verfahren wie in den Ansprüchen beschrieben gelöst.

Die Erfindung betrifft somit ein Verfahren zur Steuerung eines Farbmischgeräts und eines Farbauftragungsgeräts, wobei ein mobiles digitales Endgerät eine Szene, nämlich ein Projekt, **z.B.** ein Werkstück in Form eines Möbels oder dergleichen, über eine Schnittstelle für erweiterte Realität (Augmented Reality) erfasst und der Szene eine virtuelle Farbgebung und Materialanschauung überlagert wird. Dabei wird die Szene **i.d.R.** mittels einer Kamera oder dergleichen erfasst und mit einem virtuell generierten Bild oder Bildausschnitt, welcher **z.B.** auch teiltransparent sein kann, überlagert. Das Verfahren sieht sodann vor, dass die virtuelle Farbgebung in einen oder mehrere technische oder vorgegebene Farbräume, nämlich PANTONE oder RAL oder dergleichen eingeordnet wird und aus der Einordnung eine Steueranweisung für ein Farbmischgerät und ein Farbauftragungsgerät ermittelt wird.

Das Verfahren sieht dabei vor, dass ein mobiles digitales Endgerät, beispielsweise ein Smartphone oder ein Tablett-Computer, mittels seiner Kamera die Szene, welche das zu bearbeitende Objekt umfasst, erfasst. Durch eine Software wird sodann nach dem Prinzip der sogenannten erweiterten Realität (Augmented Reality) die Szene, insbesondere das zu bearbeitende Objekt mit einer virtuellen Farbgebung und/oder einer Materialanschauung überarbeitet. Bei dem Begriff der Farbgebung ist beispielsweise der Farbton, aber auch eine bestimmte Oberflächenstruktur im Farbton, beispielsweise ein sogenannter Vintage-Look, berücksichtigt. Die Materialanschauung kann beispielsweise zusätzliche Herausarbeitung einer Holzmaserung oder sonstige Bearbeitungsschritte umfassen.

Durch das Verfahren wird sodann die virtuelle Farbgebung, insbesondere der dort hinterlegte Farbton, in einen oder mehrere technische Farbräume wie beispielsweise Pantone oder RAL umgesetzt, sodass aus dieser Umsetzung in technische Farbräume eine Steueranweisung generiert werden kann.

Die durch das Verfahren erhaltene Steueranweisung kann sodann für ein Farbmischgerät und ein Farbbeauftragungsgerät genutzt werden, um dem mittels erweiterter Realität (Augmented Reality) erzeugten Gesamteindruck des Objekts möglichst nahe zu kommen, insbesondere bis zur Identität übereinstimmend zu gelangen.

Eine Szene im Sinne der Erfindung ist eine Momentaufnahme eines Raums mit einem oder einer Anordnung von Gegenständen, wovon einzelne Gegenstände oder ein Gruppe von Gegenständen als Projekt bezeichnet werden.

In einer bevorzugten Ausführung des Verfahrens ist vorgesehen, dass die Steueranweisung Daten zu einem Gegenstand der erfassten Szene, insbesondere Projektdaten, bevorzugt Daten zur Oberflächenkategorie, Oberflächengeometrie, etc. umfasst, welche von dem mobilen Endgerät aufgezeichnet oder generiert wurden.

Durch die Ergänzung der Steueranweisungen durch zusätzliche Daten des Projektes ist es möglich, die Steueranweisung bei ihrer Verwendung in einem Farbmischgerät und einem Farbauftragungsgerät verbessert auszuwerten, und beispielsweise die Ergebnisse dem erfassten Projekt konkret zuzuordnen. Dazu können insbesondere bei Erfassung der Oberflächenkategorie als **z.B.** Holz oder Metall und/oder der Oberflächengeometrie bereits Berechnungen angestellt werden, welche das benötigte Volumen an Farbe und/oder eventuelle Einwirkungen auf die Anmutung des Farbtons umfassen. Auch können Daten über den Anwendungsfall, beispielsweise die Nutzung im Innenbereich eines Hauses oder im Außenbereich hinterlegt werden, was die spätere Materialauswahl und/oder Verarbeitung beeinflussen kann.

Bevorzugt können die Daten über die Materialien und/oder den Anwendungsfall auch durch eine künstliche Intelligenz **bzw.** eine Auswertung der Szene durch das mobile Endgerät oder andere Rechendienste erkannt und dem Nutzer vorgeschlagen werden.

Überdies ist es möglich, durch den Nutzer eigene Korrekturen und Anpassungen an den Daten vorzunehmen, falls **z.B.** eine andere Materialbeschaffenheit oder Kategorie gewählt werden soll.

In einer weiteren Ausgestaltung ist überdies vorgesehen, dass die Schnittstelle für virtuelle Realität sekundäre Daten über eine Datenschnittstelle erhält, wobei die sekundären Daten insbesondere bestehende Farbgebungen und/oder bestehende Farbräume und/oder hinterlegte Vorlagen, bevorzugt in Form von Fotografien oder Abbildungen umfassen.

Diese bevorzugte Erweiterung des Verfahrens bietet die Möglichkeit, bestehende Farbräume oder Farbpaletten, beispielsweise saisonal vorgegebene Trend Farbtöne, oder durch den Benutzer ausgewählte Interessen an herzustellendem Gesamteindruck, in das Projekt einzubinden. Beispielsweise können Fotografien von gewünschten Erscheinungsbildern genutzt werden, um dem eigenen Projekt ähnliche Anmutung zu versehen, oder es können vorgegebene Designvorlagen seitens des Herstellers angeboten werden, welche sodann im Rahmen eigener Projekte zur Umsetzung gelangen. Auch können überdies trendbezogene Informationen, beispielsweise saisonale Farbräume oder Trendfarben von Drittanbietern eingebunden werden, um **z.B.** konkrete am Markt erhältliche Farben mit Farbtönen einer Trend-Farbpalette einzubinden. Durch diese vorgegebenen Farbpaletten können die technischen Farbräume überdies erweitert werden.

Sekundäre Daten können dabei in einer Software vorgegeben, oder über Netzwerkverbindungen, **z.B.** über das Internet oder Cloud-Dienste zur Verfügung gestellt werden.

Es ist auch möglich, dass Daten der Steueranweisung insgesamt oder anteilig auf ein externes Medium, in das Internet oder einen Cloud Dienst, oder auf dem/den Gerät/en selbst gespeichert werden, so dass eine Reproduzierbarkeit zu einem späteren Zeitpunkt, falls der selbe Farbton oder dergleichen nochmals gewünscht ist, gewährleistet ist.

Eine weitere Ausbildung des Verfahrens sieht vor, dass die Steueranweisung ein Mischverfahren umfasst, insbesondere eine Zusammensetzung eines Farbtons entsprechend virtuellen Farbgebung aus Farbkomponenten umfasst.

Aufgrund der Tatsache, dass die mobilen Endgeräte üblicherweise über vergleichsweise hohe Rechenleistung und/oder hohe Datenverfügbarkeit verfügen, ist es zweckmäßig, die Steueranweisung für ein Mischverfahren, insbesondere die Zusammensetzung eines Farbtons aus zur Verfügung stehenden Grundfarbtönen eines technischen Farbraums (Pantone, RAL, usw.) bereits in der Steueranweisung zu hinterlegen. Auf diese Weise wird sichergestellt, dass keine Konvertierungsprobleme bei der Umsetzung des virtuellen Farbtons aus der virtuellen Farbgebung in reale Farbtöne bzw. eine zu mischend Farbe auftreten.

Eine weitere zweckmäßige Ausführung sieht vor, dass die Steueranweisung ein Sprühverfahren umfasst, insbesondere ein Sprühverfahren zur Herstellung einer bestimmten Materialanschauung, bevorzugt einer Oberflächenanmutung oder Oberflächenstruktur oder Oberflächenbeschichtung.

Aus oben genannten Gründen kann es überdies zweckmäßig sein, bei hoher Verfügbarkeit von Rechenleistung und/oder Daten, **z.B.** aus dem Internet, die Steueranweisung bereits mit Anweisungen für ein Sprühverfahren auszustatten, welche ein Farbbeauftragungsgerät sodann steuert, um eine entsprechende Oberflächenanmutung oder Oberflächenstruktur beispielsweise eine Sprenkelung oder einen Wisch-Effekt herzustellen.

Eine weitere Variante des Verfahrens sieht vor, dass die Steueranweisung eine Projekterkennung und/oder Objekterkennung umfasst, insbesondere dass eine Steueranweisung für das Farbauftragungsgerät eine Funktionsfreigabe für die erfasste Szene umfasst.

Durch eine Projekterkennung und/oder Objekterkennung ist sichergestellt, dass die mittels der Steueranweisungen in einem Farbmischgerät hergestellte Farbe und/oder die mittels der Steueranweisung an ein Farbbeauftragungsgerät übermittelte Funktion einer Freigabe unterliegt, sodass die jeweilige Ausführung der Steueranweisung auf dem betreffenden Gerät nur dann freigegeben wird, wenn auch die erfasste Szene, insbesondere das betreffende Projekt bearbeitet wird. Dies kann beispielsweise dadurch erfolgen, dass über das digitale Endgerät vor der endgültigen Bearbeitung des Objekts nochmals ein Foto oder eine anderweitige Aufnahme einer Szene erfolgt, und diese mit den zur Verfügung stehenden Materialien und/oder Geräten abgeglichen wird.

In einer weiteren bevorzugten Ausführungsform ist vorgesehen, dass die Steueranweisung eine Sprühsteuerung für das Farbauftragungsgerät zur Herstellung der virtuellen Materialanschauung auf einer Oberfläche umfasst.

Ebenso ist es zweckmäßig, bei besagter hoher Verfügbarkeit von Rechenleistung und/oder Daten, **z.B.** aus dem Internet, die Steueranweisung bereits mit Anweisungen zur Steuerung des Farbbeauftragungsgeräts zu versehen, um eine gewünschte entsprechende Materialanschauung, beispielsweise eine Sprührichtung in Richtung einer Maserung eines Holzes oder eine matte oder glänzende Anmutung durch entsprechende Größenverteilung des Sprühnebels, herzustellen.

Die Erfindung betrifft überdies ein Verfahren zur Farbmischung in einem Farbmischgerät. Dabei umfasst das Farbmischgerät eine Mehrzahl an Vorratsbehältern, wobei die Vorratsbehälter je mit einer Farbe in einem Basisfarbton befüllt sind. Des Weiteren umfassend das Farbmischgerät eine Mischeinheit, wobei in der Mischeinheit aus den Vorratsbehältern Farben entnommen und zu einer Farbe mit einem vorgegebenen Farbton in einer vorgegebenen Farbmenge gemischt wird, und diese Farbe zur Mischung und/oder nach der Mischung in einen entnehmbaren Farbbehälter übergeben wird. Dabei ist vorgesehen, dass die Mischung durch eine Steueranweisung nach dem oben beschriebenen Verfahren oder den beschriebenen Weiterbildungen des Verfahrens erfolgt.

In dem vorgesehenen Verfahren zur Farbmischung in einem Farbmischgerät wird ausgehend von dem vorangegangen beschriebenen Verfahren zur Ermittlung einer Steueranweisung und dem darin hinterlegten technischen Farbraum eine Farbe hergestellt, indem mehrere Vorratsbehälter mit Farben in bestimmten Basisfarbtönen vorgesehen sind, und aus diesen Farbtönen, entsprechend der Steueranweisung und den Parametern des technischen Farbraum, eine Farbe gemischt wird, welche der Farbgebung der erweiterten Realität im Farbton entspricht. Entsprechende Mischverfahren sind zwar bekannt, jedoch werden diese in der Regel nicht durch individuell errechnete Zusammensetzungen aufgrund von Farbgebung in erweiterter Realität für den Einzelfall, sondern aufgrund von vorgegebenen Farbkarten und/oder Farbtönen standardisiert ermittelt. Auf die hier vorgeschlagene Weise wird aber im Sinne der Erfindung sichergestellt, dass mit der Steueranweisung eine möglichst hohe Übereinstimmung, bis hin zu einem identischen Farbton, verglichen mit der erfassten Szene in der erweiterten Realität, erreicht wird, und sich somit der Farbton dem Wunsch des Nutzers anpasst, und nicht der Nutzer einen Farbton aus einem zur Verfügung stehenden Farbkarten-Portfolio oder dergleichen auswählen muss.

Die Erfindung soll weiterhin in den nach führend dargelegten Ausführungsbeispielen erläutert werden. Dabei zeigen:
- Figur 1: die Aufnahme einer Szene mittels eines Smartphones;
- Figur 2: die Bearbeitung der Szene in der erweiterten Realität auf dem Smartphone;
- Figur 3: die Übertragung der Steueranweisungen, welche im Smartphone generiert wurde;
- Figur 4: die Nutzung der Steueranweisung in einem Farbmischgerät;
- Figur 5: die Nutzung einer Einwegkartusche; nicht Bestandteil der beanspruchten Erfindung.
- Figur 6: die Nutzung einer Mehrwegkartusche, insbesondere eines Farbauftragungsgeräts mit Farbmischgerät. Nicht Bestandteil der beanspruchten Erfindung.

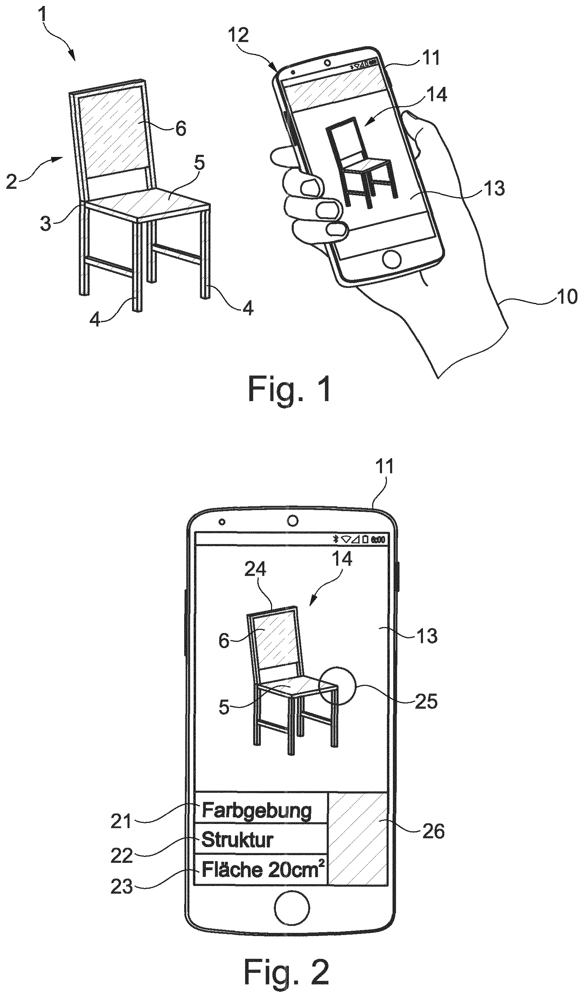

Im Einzelnen zeigt Figur 1 die Aufnahme einer Szene 1 eines Projekts 2 in Form eines Stuhls 3, bei welchem der Bereich der Stuhlbeine 4 und der Sitzfläche 5 bereits in einer bestimmten Farbgebung ausgeführt ist. Der Bereich der Lehne 6 soll nunmehr als auszuführendes Projekt 2 in bestimmter Farb- und Oberflächenanmutung gestaltet werden. Dazu wird durch einen Benutzer 10 mit einem Smartphone 11 die Szene 1 über eine Kamera 12 erfasst, und auf dem Display 13 des Smartphones 11 als Abbildung 14 dargestellt

Figur 2 zeigt nunmehr die Bearbeitung der Szene 1 auf dem Display 13 des Smartphones 11 unter Nutzung der Funktionalität der erweiterten Realität (Augmented Reality). Dabei wird beispielsweise in einem ersten Datenfeld 21 dem Projekt ein Name zugeteilt. In einem zweiten Datenfeld 22 wird eine Oberflächen Anmutung, beispielsweise eine Oberflächenstruktur in Form einer Musterung, Materialanmutung oder Sprenkelung oder dergleichen festgelegt. In einem dritten Datenfeld 23 wird die durch Einbringung einer Umrandung 24 in der Abbildung 14 der Szene die zur Bearbeitung vorgesehene Fläche der Lehne 6 berechnet. Durch eine derartige Auswahl, z.B. mit einer Umrandung 24 kann ein Flächenabschnitt bzw. eine zu beschichtete Fläche ermittelt werden. Über ein Auswahlwerkzeug 25 kann beispielsweise auch die Farbgebung der Sitzfläche 5 und/oder der Stuhlbeine 4 ermittelt werden, um über diese für das Projekt 2 in Form der Beschichtung der Rückenlehne 6 einen Farbton 26 auszuwählen.

Nach Abschluss der Bearbeitung in der erweiterten Realität auf dem Smartphone 11 wird nunmehr die Steueranweisungen gemäß der vorgeschlagenen Erfindung erstellt, wobei insbesondere der Farbton 26 in einem technischen Farbraum, beispielsweise Panton oder RAL umgesetzt wird.

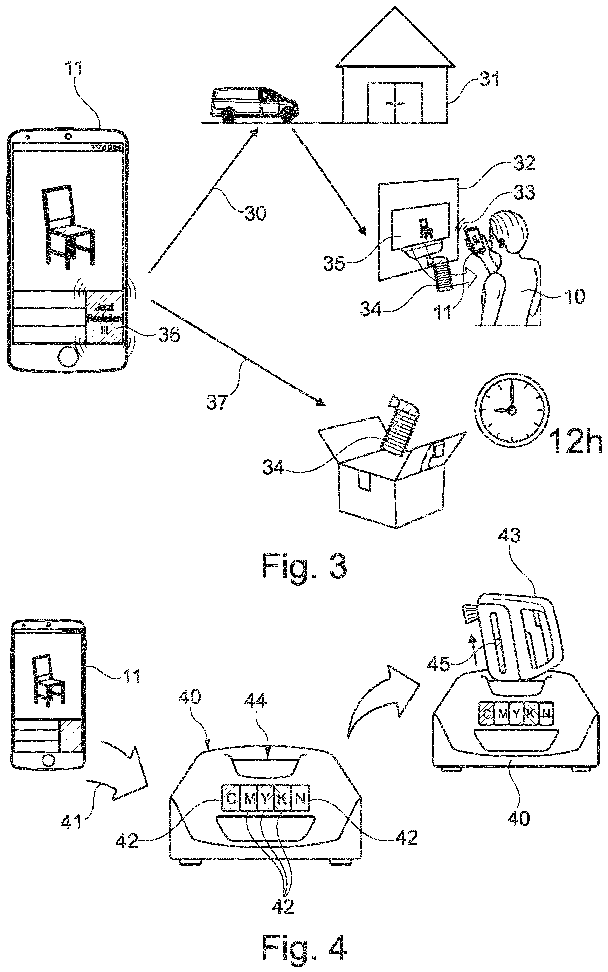

Figur 3 zeigt nunmehr die Übertragung der Steueranweisung vom Smartphone 11 einerseits durch persönliche Mitnahme/Transport 30 des Geräts 11 z.B. bei einem Besuch des Nutzers 10 in einem Baumarkt 31 bzw. Fachhandel. Dabei wird der Benutzer 10 z.B. an einer Bestellstation 32 durch Datenübertragung 33 vom Smartphone 11 auf die Bestellstation 32 die Steueranweisung vollständig oder anteilig auf ein in der Bestellstation 32 vorgesehenes Farbmischgerät übermitteln. Aufgrund der Übermittlung wird einen Farbbehälter 34 mit Farbe im gewünschten Farbton in der Bestellstation 32 oder über andere Hilfsmittel erstellt. Die Bestellstation 32 kann unter anderem ein Display 35 umfassen, auf welchem Daten zum Projekt, welches mit der Steueranweisung verbunden ist, dargestellt werden. Auf diese Weise kann der Nutzer 10 eine Überprüfung vornehmen, bevor er einen Bestellvorgang für den Fahrtbehälter 34 auslöst.

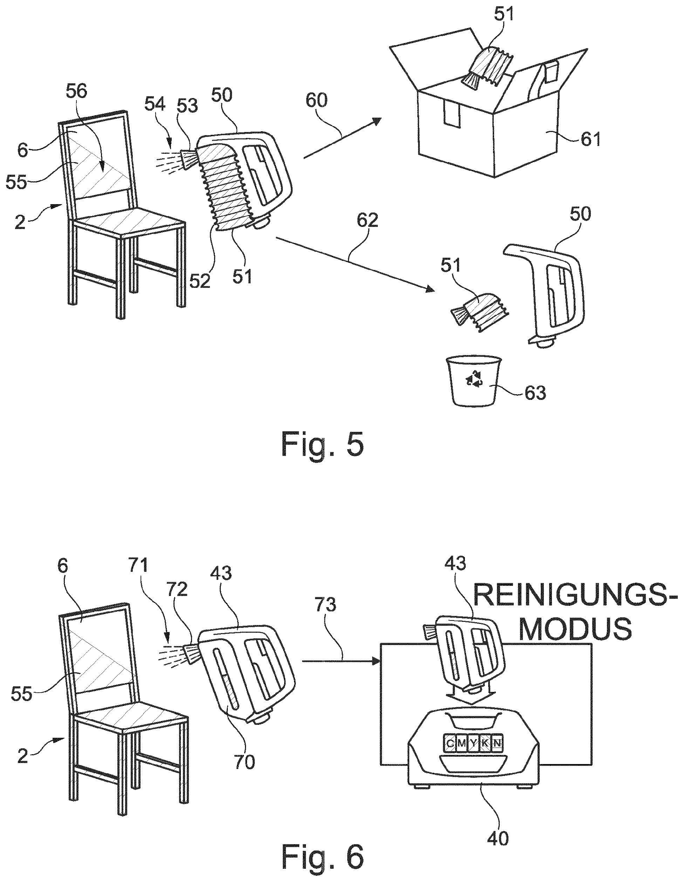

Figur 4 zeigt die alternative Nutzung eines Farbmischgeräts 40, welches über das Smartphone 11 und einen Übertragungsweg 41, z.B. Bluetooth oder WLAN oder NFC, die Steueranweisung erhält. Das Farbmischgerät verfügt dabei über eine Aufnahme 44 für ein Farbspritzgerät 43. Das Farbmischgerät 40 umfasst dabei mehrere Vorratsbehälter 42 mit Farben in verschiedenen Farbtönen (z.B. Grundfarben), welche zur Herstellung der gewünschten Farbe mit dem gewünschten Farbton gemäß Steueranweisung im Farbmischgerät 40 miteinander vermischt werden. Das Farbmischgerät 40 ermittelt anhand der Steueranweisung, welche über den Übertragungsweg 41 vom Smartphone 11 übermittelt wurde, die Zusammensetzung in Anteilen der Farben aus den Vorratsbehältern 42. Sodann kann diese Farbe nach Einbringung des Farbspritzgeräts 43 in die Aufnahme 44 des Farbmischgeräts 40 in einen in dem Farbspritzgerät 43 vorgesehenen Farbbehälter 45 durch das Farbmischgerät 40 eingebracht werden. Ebenfalls vorgesehen, jedoch nicht dargestellt ist die direkte Einbringung in einen vom Farbspritzgerät getrennten Farbbehälter oder eine Farbkartusche, welche entsprechend nachfolgend in Fig. 5 beschrieben ist. Das Farbmischgerät wird, unter Ausführung eines Mischvorgangs, die in den Vorratsbehältern 42 vorhanden Farben zu einer Farbe im gewünschten Farbton mischen und zur weiteren Bearbeitung bereitstellen. Der Mischvorgang kann z.B. auch im Farbbehälter selbst, **z.B.** durch Einbringen und anschließendes Vibrieren oder rühren, stattfinden, so dass im dem Farbmischgerät keine Schmutzbereiche mit bereits vermischten Grundfarben aus den Vorratsbehältern entstehen. Figur 5 zeigt nunmehr die Nutzung eines Farbauftragungsgeräts, vorliegend eines Farbspritzgerät 50 mit einer Einwegkartusche 51, wie sie z.B. in oben bezeichneter Figur 3 über den Handel bezogen wurde. Die Einwegkartusche 51 umfasst in einem Farbbehälter 52 Farbe eines gewünschten Farbtons für das Projekt 2 und kann in das Farbspritzgerät 50 eingesetzt werden. Die Farbkartusche 51 umfasst dabei einen Farbbehälter 52 sowie eine Farbleitung (nicht dargestellt und die erforderlichen Bestandteile zum Versprühen der Farbe, insbesondere eine Zerstäuberdüse 53. Durch die Steueranweisung wird das Farbspritzgerät 50 derart gesteuert, dass ein Farbsprühnebel 54 zur Herstellung einer Beschichtung der Oberfläche, vorliegend der Stuhllehne 6 in einem Farbton 55 erzeugt wird. Dabei ist nicht nur die Steuerung des Farbspritzgerät 50 zu Beschichtung der Oberfläche der Stuhllehne 6 in der Steueranweisung enthalten, sondern es werden auch zusätzliche Steuerparameter zur Herstellung einer bestimmten Oberflächenanmutung, **z.B.** eines Farbübergangs 56 durch das Farbspritzgerät 50 ausgeführt. Nach Beendigung der Arbeit kann die Einwegkartusche 51 entweder über den Versandhandel 60 in einem Karton 61 in ein Pfandsystem rückgeführt werden, oder sie wird über den Entsorgungsweg 62 dem Abfall 63 zugeführt. Das Farbspritzgerät 50 verbleibt dabei ohne Einwegkartusche 51 und kann für den folgenden Einsatz unmittelbar wieder genutzt werden, ohne dass Bestandteile des Farbspritzgeräts 50 gereinigt werden müssen.

Die Einwegkartusche 51 ist vorliegend mit einem komprimierbaren Farbbehälter 52 dargestellt, welcher nach Entnahme der Farbe zusammengedrückt, und somit platzsparend entsorgt oder zurückgesandt werden kann.

Figur 6 zeigt wiederum die Nutzung einer Mehrwegkartusche in Kombination mit einem Farbmischgerät 40. Dabei hat das Farbspritzgerät 43 wie in Figur 4 beschrieben eine Farbfüllung eines gewünschten Farbtons 70 erhalten. Das Farbspritzgerät 43 trägt nun die Farbe mit einem Farbsprühnebel 71 über eine dem Farbspritzgerät innewohnende Farbdüse 72 auf das Projekt 2, insbesondere die Stuhllehne 6 im gewünschten Farbton 55 auf. Nach Abschluss der Bearbeitung des Projekts 2 wird das Farbspritzgerät 43 in das Farbmischgerät 40 in einem Reinigungsschritt 73 zurückgestellt. Das Farbmischgerät 40 führt sodann einen Reinigungsvorgang am Farbspritzgerät 43 aus, um es für die Einmischung einer Farbe mit einem neuen Farbton oder eine Auffüllung der des Farbbehälters mit dem bestehenden Farbton vorzubereiten, wie oben in Fig. 4 beschrieben wurde.

### Bezugszeichenliste

- 1: Szene
- 2: Projekt
- 3: Stuhl
- 4: Stuhlbeine
- 5: Sitzfläche
- 6: Lehne
- 10: Benutzer
- 11: Smartphone
- 12: Kamera
- 13: Display
- 14: Abbildung
- 21: erstes Datenfeld
- 22: zweites Datenfeld
- 23: drittes Datenfeld
- 24: Umrandung
- 25: Auswahlwerkzeug
- 26: Farbton
- 30: persönliche Mitnahme / Transport
- 31: Baumarkt / Fachhandel
- 32: Bestellstation
- 33: Datenübertragung
- 34: Farbbehälter
- 35: Display an Bestellstation
- 36: Bestellsoftware
- 37: Bestellvorgang
- 40: Farbmischgerät
- 41: Übertragungsweg
- 42: Vorratsbehälter
- 43: Farbauftragungsgerät/Farbspritzgerät
- 44: Aufnahme für ein Farbspritzgerät
- 45: Farbbehälter
- 50: Farbauftragungsgerät/Farbspritzgerät
- 51: Einwegkartusche
- 52: Farbbehälter
- 53: Zerstäuberdüse
- 54: Farbsprühnebel
- 55: Farbton
- 56: Farbübergang
- 60: Versandhandel
- 61: Karton
- 62: Entsorgungsweg
- 63: Abfall
- 70: Farbton
- 71: Farbsprühnebel
- 72: Farbdüse
- 73: Reinigungsschritt

## Patentansprüche

1. Verfahren zur Steuerung eines Farbmischgeräts (40) und eines Farbauftragungsgeräts, wobei ein mobiles digitales Endgerät eine Szene (1), nämlich ein Projekt (2), über eine Schnittstelle für erweiterte Realität (Augmented Reality) erfasst und der Szene (1) eine virtuelle Farbgebung und Materialanschauung überlagert wird, dass die virtuelle Farbgebung in einen oder mehrere technische oder vorgegebene Farbräume, nämlich PANTONE oder RAL oder dergleichen eingeordnet wird und aus der Einordnung eine Steueranweisung für ein Farbmischgerät (40) und ein Farbauftragungsgerät (43, 50) ermittelt wird, wobei die Steueranweisung ein Sprühverfahren umfasst, nämlich ein Sprühverfahren zur Herstellung einer bestimmten Materialanschauung, nämlich einer Oberflächenanmutung oder Oberflächenstruktur oder Oberflächenbeschichtung, wobei die Steueranweisung eine Sprühsteuerung für das Farbauftragungsgerät (43, 50) zur Herstellung der virtuellen Materialanschauung auf einer Oberfläche umfasst.

2. Verfahren nach Anspruch 1, **dadurch gekennzeichnet, dass** die Steueranweisung Daten zu einem Gegenstand der erfassten Szene (1), nämlich Projektdaten, wie Daten zur Oberflächenkategorie, Oberflächengeometrie, etc. umfasst, welche von dem mobilen Endgerät aufgezeichnet oder generiert wurden.

3. Verfahren nach Anspruch 1 oder 2, **dadurch gekennzeichnet, dass** die Schnittstelle für virtuelle Realität sekundäre Daten über eine Datenschnittstelle erhält, wobei die sekundären Daten insbesondere bestehende Farbgebungen und/oder bestehende Farbräume und/oder hinterlegte Vorlagen, bevorzugt in Form von Fotografien oder Abbildungen (14) erhält.

4. Verfahren nach einem der vorangegangenen Ansprüche, **dadurch gekennzeichnet, dass** die Steueranweisung ein Mischverfahren umfasst, insbesondere eine Zusammensetzung eines Farbtons entsprechend virtuellen Farbgebung aus Farbkomponenten umfasst.

5. Verfahren nach einem der vorangegangenen Ansprüche, **dadurch gekennzeichnet, dass** die Steueranweisung eine Projekterkennung und/oder Objekterkennung umfasst, insbesondere dass eine Steueranweisung für das Farbauftragungsgerät (43, 50) eine Funktionsfreigabe für die erfasste Szene umfasst.

6. Verfahren zur Farbmischung in einem Farbmischgerät (40), umfassend eine Mehrzahl an Vorratsbehältern (42), wobei die Vorratsbehälter (42) je mit einer Farbe in einem Basisfarbton befüllt sind, sowie umfassend eine Mischeinheit, wobei in der Mischeinheit aus den Vorratsbehältern (42) Farben entnommen und zu einer Farbe mit einem vorgegebenen Farbton (26, 55, 70) in einer vorgegebenen Farbmenge gemischt wird, und diese Farbe zur Mischung und/oder nach der Mischung in einen entnehmbaren Farbbehälter (34, 45, 52) übergeben wird, **dadurch gekennzeichnet, dass** die Mischung durch eine Steueranweisung nach einem Verfahren nach einem der vorangegangenen Ansprüche 1 bis 5 erfolgt.

## Claims

1. Method for controlling a paint mixing device (40) and a paint application device, a mobile digital terminal capturing a scene (1), to be specific a project (2), via an interface for augmented reality, and a virtual colouring and/or material illustration being superimposed on the scene (1), that the virtual colouring is classified according to one or more technical or pre-specified colour spaces, to be specific PANTONE or RAL or the like, and a control statement for a paint mixing device (40) and a paint application device (43, 50) is determined from the classification, the control statement comprising a spraying process, to be specific a spraying process for producing a specific material illustration, to be specific a surface appearance or surface structure or surface coating, the control statement comprising a spraying control for the paint application device (43, 50) for producing the virtual material illustration on a surface.

2. Method according to Claim 1, **characterized in that** the control statement comprises data on an object of the captured scene (1), to be specific project data, such as data on the surface category, surface geometry, etc., which have been recorded or generated by the mobile terminal.

3. Method according to Claim 1 or 2, **characterized in that** the interface for virtual reality receives secondary data via a data interface, the secondary data comprising in particular existing colourings and/or existing colour spaces and/or stored templates, preferably in the form of photographs or pictures (14).

4. Method according to one of the preceding claims, **characterized in that** the control statement comprises a mixing process, in particular a composition of a colour corresponding to virtual colouring from colour components.

5. Method according to one of the preceding claims, **characterized in that** the control statement comprises a project identification and/or object identification, in particular **in that** a control statement for the colour application device (43, 50) comprises a functional approval for the captured scene.

6. Method for paint mixing in a paint mixing device (40), comprising a plurality of storage containers (42), the storage containers (42) each being filled with a paint of a base colour, and also comprising a mixing unit, paints being removed from the storage containers (42) in the mixing unit and mixed to form a paint of a pre-specified colour (26, 55, 70) in a pre-specified amount of paint, and this paint being transferred into a removable paint container (34, 45, 52) for mixing and/or after mixing, **characterized in that** the mixing is performed by a control statement on the basis of a method according to one of the preceding Claims 1 to 5.

## Revendications

1. Procédé de commande d'un appareil de mélange de peinture (40) et d'un appareil d'application de peinture, un terminal numérique mobile détectant une scène (1), à savoir un projet (2), par une interface de réalité augmentée et une coloration virtuelle et une illustration matérielle étant superposées à la scène (1), la coloration virtuelle étant classée dans un ou plusieurs espaces colorimétriques techniques ou prédéfinis, à savoir Pantone ou RAL ou similaire, et une instruction de commande pour un appareil de mélange de peinture (40) et un appareil d'application de peinture (43, 50) étant déterminée à partir de la classification, l'instruction de commande comprenant un procédé de pulvérisation, à savoir un procédé de pulvérisation permettant de produire une illustration matérielle donnée, à savoir un aspect de surface ou une structure de surface ou un revêtement de surface, l'instruction de commande comprenant une commande de pulvérisation pour l'appareil d'application de peinture (43, 50) permettant de produire l'illustration matérielle virtuelle sur une surface.

2. Procédé selon la revendication 1, **caractérisé en ce que** l'instruction de commande comprend des données relatives à un objet de la scène (1) détectée, à savoir des données de projet, telles que des données relatives à la catégorie de surface, à la géométrie de surface, etc., qui ont été enregistrées ou générées par le terminal mobile.

3. Procédé selon la revendication 1 ou 2, **caractérisé en ce que** l'interface de réalité virtuelle reçoit des données secondaires par une interface de données, les données secondaires recevant en particulier des colorations existantes et/ou des espaces colorimétriques existants et/ou des modèles mémorisés, de manière préférée sous la forme de photographies ou de représentations (14).

4. Procédé selon l'une des revendications précédentes, **caractérisé en ce que** l'instruction de commande comprend un procédé de mélange, en particulier comprend une composition d'une teinte correspondant à une coloration virtuelle à partir de composantes de peinture.

5. Procédé selon l'une des revendications précédentes, **caractérisé en ce que** l'instruction de commande comprend une reconnaissance de projet et/ou une reconnaissance d'objet, en particulier qu'une instruction de commande pour l'appareil d'application de peinture (43, 50) comprend un déblocage de fonctions pour la scène détectée.

6. Procédé de mélange de peinture dans un appareil de mélange de peinture (40), comprenant une multitude de récipients de stockage (42), les récipients de stockage (42) étant chacun remplis d'une peinture dans une teinte de base, et comprenant également une unité de mélange, des peintures étant prélevées des récipients de stockage (42) dans l'unité de mélange et étant mélangées à une teinte prédéfinie (26, 55, 70) en une quantité de peinture prédéfinie pour obtenir une peinture et ladite peinture étant transférée dans un contenant de peinture amovible (34, 45, 52) pour le mélange et/ou après le mélange, **caractérisé en ce que** le mélange est effectué par une instruction de commande selon un procédé selon l'une des revendications précédentes 1 à 5.
